Europäisches Patentamt

European Patent Office

Office européen des brevets

(19)

(11) **EP 0 413 262 B1**

(12) **EUROPEAN PATENT SPECIFICATION**

(45) Date of publication and mention
of the grant of the patent:
**24.01.1996 Bulletin 1996/04**

(51) Int Cl.6: **C08L 101/00**, C08L 53/00,
C08L 23/10
// (C08L101/00, 53:02)

(21) Application number: 90115331.2

(22) Date of filing: **09.08.1990**

(54) **Thermoplastic resin composition**

Thermoplastische Harzzusammensetzung

Composition de résine thermoplastique

(84) Designated Contracting States:
**DE FR GB IT NL**

(30) Priority: **17.08.1989 JP 212408/89**

(43) Date of publication of application:
**20.02.1991 Bulletin 1991/08**

(73) Proprietor: **KURARAY CO., LTD.**
**Kurashiki-City, Okayama Prefecture 710 (JP)**

(72) Inventors:
• **Ishii, Masao**
**Kashima-gun, Ibaraki-pref. (JP)**
• **Wada, Koichi**
**Kashima-gun, Ibaraki-pref. (JP)**
• **Nishikawa, Makoto**
**Kashima-gun, Ibaraki-pref. (JP)**
• **Minatono, Shobu**
**Kashima-gun, Ibaraki-pref. (JP)**

(74) Representative: **Müller-Boré & Partner**
**Patentanwälte**
**D-81671 München (DE)**

(56) References cited:
**EP-A- 0 164 157       EP-A- 0 211 466**
**EP-A- 0 330 088       FR-A- 2 354 368**
**US-A- 4 119 607       US-A- 4 177 184**

Remarks:
The file contains technical information submitted
after the application was filed and not included in
this specification

**Description**

This invention relates to a resin composition having excellent flexibility and impact resistance, along with good flow processability, prepared by blending a mixture of particular block copolymers.

Hydrogenated block copolymers comprising of conjugated diene block and aromatic vinyl hydrocarbon block are widely in use for daily necessities, automotive parts, light electric parts, various industrial parts and the like, because the block copolymers are weathering resistant and heat resistant thermoplastic rubber equivalents with excellent flexibilities and impact resistances, having similar strengths and elastomeric characteristics as vul-canized rubber without vulcanization.

The prior art literatures, U.S. Pat. Nos. 3, 333, 024, 3, 644, 588, 3,700,748 and B.P. No. 1, 043, 023 describe the procedures for the preparation of these hydrogenated block polymers.

EP-A-0 330 088 which is prior art according to Art. 54(3)(4) EPC, describes a pressure sensitive adhesive composition comprising a tri-block copolymer and a block copolymer, and optionally a tackifying resin. EP-A-0 164 157 describes a thermoplastic moulding composition comprising blends of a selectively hydrogenated tri-block copolymer, a hydrogenated diblock copolymer and polycarbonate. US-A-4 177 184 describes polymeric blends for automotive applications comprising a polyolefin, a hydrogenated tri-block polymer and a rubberizing compound.

There are known various procedures to improve impact resistance by blending a hydrogenated block copolymer with thermoplastic resins in various applications as described above. For example, B.P. No. 1,359,740 discloses a process for improving polypropylene property in impact resistance at low temperatures by blending a hydrogenated block copolymer, and processes improving characteristics by blending a block copolymer are shown in B.P. No. 1,563,768 for Noryl® resin and in U. S. Pat. No. 4,090,996 and 4,119,607 for engineering plastics such as polyester resins and polyamide resins.

However, in the conventional processes comprising the addition of hydrogenated block copolymers to resin compositions for the improvement of impact resistance with no loss of mechanical properties, the molecular weight of the block copolymer is desirably required to be 100,000 or more. But the blending of the block copolymer having such a high molecular weight reduces the flowability of resin compostion resulting in shortcomings of inferior in injection and extrusion molding processing.

Under these conditions, the present inventors made studies on a process for the preparation of thermoplastic resins having excellent flexibility and impact resistance along with good flow processability. As the result, it was found that the mixing of two different type hydrogenated block copolymers each having its particular structure overcame the shortcomings for attaining the objects, and the invention was completed.

According to the present invention, there is provided a thermoplastic resin composition which comprises (I) 5 to 95 parts by weight of a thermoplastic resin and 95 to 5 parts by weight of a mixture of (II) a tri-block copolymer having a numerical average molecular weight of 100,000 or more and consisting of aromatic vinyl block-conjugated diene block-aromatic vinyl block, wherein the conjugated diene moiety is hydrogenated at a rate of 30% or more, and of (III) a block copolymer A or B shown in the following formula (1), characterized in that the block copolymer A or B has a numerical average molecular weight in the range of between 10,000 and 45,000 and consists of aromatic vinyl block and conjugated diene block, wherein the conjugated diene moiety is hydrogenated at a rate of 30% or more and the ratio by weight of aromatic vinyl block/conjugated diene block is in the range of 5/95 to 50/50, in which

$$A = (S \text{ - } D)_n \text{ or } B = (D \text{ - } S)_n \text{ - } D \tag{1}$$

wherein S: aromatic vinyl block,
D: conjugated diene block,
n: an integer of 1 to 5,

the ratio by weight of tri-block copolymer to block copolymer A or B being in the range of 95/5 to 20/80, with the proviso that the above-mentioned thermoplastic resin (I) is not a tackifier resin selected from natural and synthetic resins and is different from the tri-block copolymer (II) and block copolymer (III).

If the tri-block copolymer, and the block copolymer A or B has a rate of hydrogenation of less than 30%, the block copolymer has a tendency to be thermally deteriorated and to become mal-compatible at melt mixing with thermoplastic resin. Accordingly the molded products from the thermoplastic resin blended with the copolymers have an unfavorable deficiency of inferior in weatheribility. Further, the rate of hydrogenation used herein means a rate of hydrogenation of carbon-carbon unsaturated double bonds in the conjugated dienes. The rate can be determined by measuring iodine values prior and after the hydrogenation and calculating the ratio of the latter to the former by percent.

The hydrogenated tri-block copolymers consisting of aromatic vinyl block-conjugated diene block-aromatic vinyl block according to the present invention include styrene block-isoprene block-styrene block, $\alpha$-methylstyrene block-iso-

prene block-$\alpha$ -methylstyrene block, styrene block-butadiene block-styrene block, $\alpha$ -methylstyrene block-butadiene block-$\alpha$ -methylstyrene block, and the like. In view of the superior flexibility and impact resistance at low temperatures, the conjugated diene moiety is preferably isoprene.

The numerical average molecular weight of the hydrogenated tri-block copolymer ($M_n$) should be 100,000 or more. When the numerical average molecular weight is less than 100,000, a problem of decrease in mechanical strengths of hydrogenated tri-block copolymer and accordingly the reduction in physical properties of the products molded from the blend of the mixed hydrogenated copolymers with thermoplastic resin occurs. The numerical average molcular weight used herein is the value observed by a usual gel permeation chromatography (GPC) method (see generally the method described in "Gel Chromatography, Fundamentals" (in Japanese) published by Kodansha). Strictly speaking, the upper limit of the numerical average molecular weight of preferred hydrogenated tri-block copolymer does not exist but may be about 400,000 in the view point of preparation process practices.

The ratio by weight of aromatic vinyl block/conjugated diene block in hydrogenated tri-block copolymer can be selected in the range of 5/95 to 80/20 according to the object. However, the preferable range is 10/90 to 70/30 in the view point of flexibility and impact resistance improvements.

The block copolymer A or B used in the invention which consists of aromatic vinyl block and conjugated diene block wherein the conjugated diene moiety is hydrogenated is a block copolymer which consists of a moiety formed by polymerization of one or more of conjugated diene monomers such as isoprene, butadiene and pyperine, and a moiety formed by polymerization of aromatic vinyl monomers such as styrene and $\alpha$ -methylstyrene. However, isoprene is preferably used in the view point of flexibility and impact resistance improvements.

Further, the numerical average molecular weight of hydrogenated block copolymer A or B is in the range of 10,000 to 45,000, and the ratio by weight of aromatic vinyl block/conjugated diene block is in the range of 5/95 to 50/50. If the numerical average molecular weight of the block copolymer A or B is less than 10,000, the resin composition prepared by blending the block copolymers with thermoplastic resin shows an imperfection tending to bleed. On the other hand, if the molecular weight is more than 45,000, the resin composition prepared by blending the block copolymers with thermoplastic resin shows a decline in melt flowability and molding processing. If the ratio by weight of aromatic vinyl block/conjugated diene block is less than 5/95, the resultant copolymer does not show good compatibility with the hydrogenated tri-block copolymer of aromatic vinyl block-conjugated diene block-aromatic vinyl block, resulting in an unfavorable tendency of bleeding. When the ratio by weight of aromatic vinyl block/conjugated diene block is more than 50/50, the obtained thermoplastic resin composition has lower characteristics in flexibility and impact resistance, and this tendency is remarkable at low temperatures.

When the integer n in the formula is 6 or more, the resultant copolymer drops its compatibility with partially hydrogenated tri-block copolymer, resulting in an unfavorable tendency of bleeding.

The hydrogenated tri-block copolymer and the hydrogenated block copolymer A or B according to the present invention may contain functional groups such as a carboxyl group, a hydroxyl group and an acid anhydride in the molecular chain or at ends of the molecule.

The block copolymers which have not been hydrogenated yet can be readily obtained by anionic polymerization. For instance, the block copolymer is prepared by a process in which a conjugated diene monomer and an aromatic vinyl (e.g. styrene) monomer are successively polymerized using an alkyl lithium such as butyl lithium or an aryl lithium such as styryl lithium as a catalyst, or a process in which the respective monomers are separately subjected to polymerization reaction and the resultant polymers are combined by using a coupling agent. In these processes, a solvent which is inert to the catalyst can be used. Examples of the solvent include hydrocarbon type solvents such as cyclohexane and toluene.

These non-hydrogenated block copolymers can be converted into corresponding hydrogenated products by any well-known methods.

As an instance of the hydrogenation reaction, the copolymers are hydrogenated with hydrogen gas at a temperature of normal temperature to 200°C, under a pressure of normal pressure to 200 kg/cm$^2$, for a period of 0.1 to 100 hours, with a catalyst of a metal such as nickel, palladium, platinum, ruthenium supported on carbon or alumina, a heterogenous catalyst such as Raneynickel and the like, or a homogenous catalyst such as a Ziegler catalyst made of a combination of an organic transition metal compound (e.g. nickel naphthenate, cobalt naphthenate, nickel acetylacetonate, or cobalt acetylacetonate and an alkylated product of aluminum, an alkali earth metal or an alkali metal. The hydrogenation reaction can be effected in a state where the block copolymer is thermally melted or dissolved in a reaction solvent, but the latter is preferable in view of ease in reaction control. The reaction solvent may be any solvent which is inert to the hydrogenation reaction and is preferably an alicyclic hydrocarbon such as cyclohexane. Aromatic hydrocarbons such as benzene and toluene may also be preferably used depending upon reaction conditions.

After the completion of the hydrogenation reaction, the catalyst is separated and removed from the reaction product by a usual manner to obtain the hydrogenerated product. The obtained hydrogenated product can be used as it is but may be further modified to incorporate polar groups such as a hydroxyl group, a carboxyl group and a halogen at terminal ends or side chains of the molecule.

In the resin compositions of the present invention, the tri-block copolymer which consists of aromatic vinyl block-conjugated diene block-aromatic vinyl block and whose conjugated diene moiety is hydrogenated and the aforementioned block copolymer A or B in which the conjugated diene moiety is hydrogenated are used by mixing at a ratio by weight of 95/5 to 20/80, preferably 90/10 to 30/70. If the content of the hydrogenated block copolymer A or B is less than 5%, the resin composition obtained by blending the mixed block copolymers with thermoplastic resin shows a decline in melt flowability and molding processability at injection and extrusion molding. When the content of the hydrogenated block copolymer A or B is over 80%, the products molded from the resin compostiion have inferior physical properties though its melt flowability is improved.

According to the present invention, it is important to blend the mixture of partially hydrogenated tri-block copolymer and hydrogenated block copolymer A or B with thermoplastic resin at a ratio by weight of 95/5 to 5/95, preferably 90/10 to 10/90, thereby resin compositions having excellent flexibility and impact resistance along with good flow processability are obtained. If the ratio by weight of mixed hydrogenated block copolymers to thermoplastic resin is more than 95%, the products molded from the resin compostions have lower physical strengths. When the ratio by weight of mixed hydrogenated block copolymers is less than 5%, the products molded from the resin compositions have lower flexibilities and impact resistances.

Both methods of blending the preliminary prepared mixture of a partially hydrogenated tri-block copolymer and hydrogenated block copolymer A or B with thermoplastic resin and mixting of the preliminary prepared blends of a partially hydrogenated tri-block copolymer and thermoplastic resin, and of hydrogenated block copolymer A or B and thermoplastic resin can be used.

Examples of thermoplastic resin used for the present invention include polyolefine type resin comprising polyethylene, polypropylene, a copolymer polymerized of propylene and $\alpha$-olefines such as ethylene and 1-butene, styrene type resins such as polystyrene, high impact resistant polystyrene, ABS and AS, polyester type resins such as polyethylene telephthalate and polybutylene telephthalate, polyamide type resins such as nylon 6, nylon 66 and nylon 12, polycarbonate type resins, and polyphenylene ether type resins. Among them, polypropylene and block copolymer of propylene and ethylene are most preferable.

The resin compositions according to the present invention comprise two different type hydrogenated block copolymers and a thermoplastic resin as requisites as described above; further, the addition of mineral oil type softening agents such as paraffin type oil and naphthene type oil can contribute to improve flowability at mold processing and make the products more flexible, when the need arise. Also, inorganic fillers such as calcium carbonate, talk, carbon black, titanium oxide, silica, clay, barium sulfate and magnesium carbonate may be blended to improve heat resistance and weatherability or as extender filler. Further inorganic and organic fibers such as glass fiber and carbon fiber can also be blended. In addition to afore-mentioned, thermal stabilizers, anti-oxidants, light stabilizers, flame retardants, tackifiers, antistatic agents, and foaming agents can be added.

The resin compositions according to the present invention can be prepared by kneading the raw materials under molten state using a kneader or mixer such as single-screw extruder, twin-screw extruder, Bambury mixer, Brabender, Hanschel mixer, open roll, kneader and mixer.

EXAMPLES

The present invention is described in more detail by way of examples, which should not be construed as limiting the invention.

The characteristics of the resin compositions obtained according to the invention were evaluated by the following methods.

a) Flexibility

As shown in Table 1, flexibility is comprehensively evaluated from the value of initial Young's modulus accounted from the data of mechanical properties according to JIS K-7113 and the value of stiffness (Shore hardness, D-scale) according to JIS K-7215.

b) Impact resistance

Indices of impact resistance are shown in Table 1 as "height to 50% failure" which means the height of weight from where a eggplant shaped 3 kg weight is falled on a sheet sample injection molded using a resin composition in a size of 2 mm depth, 20 cm width and 20 cm length to break 50%(5 samples in 10 samples) to failure.

c) Melt flowability

Melt flowabilities are shown in Table 1 as melt flow rate (MFR) according to JIS K-7210.

d) Heat resistance

Heat resistance are shown in Table 1 as comprehensive evaluation of surface oiliness to touch on the surface of sample sheet injection molded according to the procedures described in b) section, allowed to stand in an air-oven at 150 °C for 24 hours, and cooled to room temperature.

In Table 1, the meaning of each sign is as follows: ⓞ very good, O : good, $\triangle$ : slightly poor, X : poor.

Example 1

In a pressure vessel with mixing equipment, 3000 kg of cyclohexane, 50 kg of styrene and 0.7 kg of n-butyl lithium were charged and polymerized at 60°C for 60 minutes, then 300 kg of isoprene was charged and polymerized for 60 minutes to obtain styrene-isoprene-styrene tri-block type copolymer. The obtained tri-block copolymer was found to have a styrene content of 25% by weight and a numerical average molecular weight of 120,000. After the addition of cyclohexane to become a polymer concentration of 10% by weight, the vessel was vacuum extracted and replaced by hydrogen gas, then was added a palladium catalyst to become a concentration of 0.5% by weight to polymer, and hydrogenated at a pressure of 10 kg/cm$^2$ to get hydrogenated tri-block copolymer having a hydrogenation rate of 97%.

According to the same procedures of polymerization and hydrogenation, a hydrogenated di-block copolymer having a styrene content of 20% by weight, a numerical average molecular weight of 40,000 and a hydrogenation rate of 96%.

Mixing of hydrogenated tri-block copolymer and hydrogenated di-block copolymer in a ratio by weight of 80/20 gave a mixture of block copolymers. To 30 kg of this mixed block copolymers was added 70 kg of commercially available polypropylene (Noblen® PY-230, available from Mitsubishi Petrochemical Co., Ltd.) and melt kneaded by a small twin screw extruder to obtain pellet compound. The obtained pellet compound was formed in sheet by the following method.

A sheet was formed by extruding at a cyclinder temperature of 225°C, a die temperature of 220°C, a extruder output of 8 kg/hr, a extrusion speed of 2.8m/min and cooling in a cooling bath with a temperature of 60°C, using a small screw extruder (full frighted screw, L/D=24). The obtained sheet was deep drawed into a cup molded product under heating at 80°C. The molded product has excellent impact resistance as compared with a product which is not blended with mixed hydrogenated block copolymers. The obtained thermoplastic resin compositions were evaluated according to the aforementioned methods and the results are shown in Table 1.

Comparative Example 1

Commercially available polypropylene (available from Mitsubishi Petrochemical Co., Ltd., Noblen® PY-230) with no addition of mixed hydrogenated block copolymers was evaluated, and the results were shown in Table 1, which shows that commercially available polypropylene alone cannot make a sufficient impact resistance.

Example 2

The same procedures as Example 1 were repeated except that the hydrogenation rates of both tri-block and di-block copolymers were 40%, and the obtained products were evaluated. The results are shown in Table 1.

Comparative Example 2

The same procedures ad Example 1 were repeated except that the hydrogenation rates of both tri-block and diblock copolymers were 25%, and the obtained products were evaluated. The results are shown in Table 1, which shows that the resin compositions having a low hydrogenation rate decline in heat resistance and also in compatibility at blending with commercially available propylene.

Comparative Example 3

The same procedures as Example 1 were repeated except that the numerical average molecular weight of hydrogenated tri-block copolymer was 90,000 and the blend ratio of commercial available polypropylene to the mixture of hydrogenated block copolymers was 40/60, and the obtained products were evaluated. The test results are shown in Table 1, which shows that the obtained products have inferior breaking strengths accompanied by problems for practical use.

Example 4

The same procedures as Example I were repeated except that the mixing ratio by weight of tri-block copolymer to di-block copolymer is 30/70, and the obtained products were evaluated. The results are shown in Table 1.

Comparative Example 4

The same procedures as Example I were repeated except that the blend ratio by weight of hydrogenated tri-block copolymer to hydrogenated block copolymer was 97/3, and were evaluated in various physical properties, and the results are shown in Table 1.

The test results show that the products obtained from the resin compositions blended in lower ratios of hydrogenated block copolymers have lower values of MFR and are undesirably inferior in melt flowability, that is in mold processability.

Example 5

The same procedures as Example 1 were repeated except that the blend ratio by weight of commercially available polypropylene to mixed block copolymers was 90/10, and the obtained products were evaluated. The results are shown in Table 1.

Comparative Example 5

The same procedures as Example 1 were repeated except that the blend ratio by weight of commercially available polypropylene to mixed block copolymers was 97/3, and the obtained products were evaluated. The test results are shown in Table I, which shows that the products obtained from the resin compositions prepared by blending a lower rate of hydrogenated block copolymers are inferior in flexibility and impact resistance improvements.

Example 6

The same procedures as Example 1 were repeated except that the blend ratio by weight of commercially available polypropylene to hydrogenated mixed block copolymers were 10/90, and the obtained products were evaluated. The test results are shown in Table 1.

Comparative Example 6

The same procedures as Example 1 were repeated except that the blend ratio by weight of commercially available polypropylene to hydrogenated mixed block copolymers were 3/97, and the obtained products were evaluated. The test results are shown in Table 1, which shows that the products obtained from resin compositions prepared by blending mixed block copolymers too much have inferior tensile breaking strength accompanied by problems for practical use.

Comparative Example 7

According to the prdocedures of Example 1, a di-block copolymer having a numerical average molecular weight of 55,000, a styrene content of 20% by weight and a hydrogenation rate of 96% was prepared and mixed with the tri-block copolymer prepared in Example 1 in a ratio by weight of 70/30. The obtained mixed block copolymers were blended with commercially available polypropylene in a ratio by weight of 10/90, and the obtained products were evaluated. The test results are shown in Table 1, which shows that the products obtained from resin compositions prepared by blending the mixture mixed with a di-block copolymer having a too big numerical average molecular weight as compared with Example 5 have lower impact resistances and unfavorably lower melt flowabilities.

Table 1

| Example Number | Hydrogenated tri-block copolymer molecular features | | | hydrogenated di-block copolymer molecular features | | | Mixed ratio by weight of tri-block copolymer/di-block copolymer | Blend ratio by weight of polypropylene/mixed block copolymers |
|---|---|---|---|---|---|---|---|---|
| | NAMW ($10^4$) | Styrene content (wt%) | Hydrogenation rate (%) | NAMW ($10^4$) | Styrene content (wt%) | Hydrogenation rate (%) | | |
| Ex.1 | 12.0 | 25 | 97 | 4.0 | 20 | 96 | 70/30 | 70/30 |
| C.E.1 | — | — | — | — | — | — | — | 100/0 |
| Ex.2 | 12.0 | 25 | 40 | 4.0 | 20 | 40 | 70/30 | 70/30 |
| C.E.2 | 12.0 | 25 | 25 | 4.0 | 20 | 25 | 70/30 | 70/30 |
| C.E.3 | 9.0 | 25 | 97 | 4.0 | 20 | 96 | 70/30 | 40/60 |
| Ex.3 | 12.0 | 25 | 97 | 4.0 | 20 | 96 | 90/10 | 70/30 |
| C.E.4 | 12.0 | 25 | 97 | 4.0 | 20 | 96 | 97/3 | 70/30 |
| Ex.4 | 12.0 | 25 | 97 | 4.0 | 20 | 96 | 30/70 | 70/30 |
| Ex.5 | 12.0 | 25 | 97 | 4.0 | 20 | 96 | 70/30 | 90/10 |
| C.E.5 | 12.0 | 25 | 97 | 4.0 | 20 | 96 | 70/30 | 97/3 |
| Ex.6 | 12.0 | 25 | 97 | 4.0 | 20 | 96 | 70/30 | 10/90 |
| C.E.6 | 12.0 | 25 | 97 | 4.0 | 20 | 96 | 70/30 | 3/97 |
| C.E.7 | 12.0 | 25 | 97 | 5.5 | 20 | 96 | 70/30 | 90/10 |

Note: Ex.: Example, C.E.: Comparative Example, NAMW: Numerical Average Molecular Weight.

Table 1 (Continued)

| Example Number | Evaluation of physical properties of thermoplastic resin composition | | | | | |
|---|---|---|---|---|---|---|
| | Flexibility | | | Impact resistance | Melt Flowability | Comprehensive Heat Resistance |
| | Initial Young's Modulus [MPa] (kgf/cm²) | Hardness (Shore D scale) | Comprehensive evaluation | Height to 50% failure (cm) | MFR (g/10min) | |
| Ex.1 | 686,47 (7,000) | 41 | ◎ | >140 | 2.0 | ◎ |
| C.E.1 | 1,275.86 (13,000) | 62 | × | 40 | 1.8 | ◎ |
| Ex.2 | 666.85 (6,800) | 40 | ◎ | >140 | 2.2 | ◎−○ |
| C.E.2 | 657.05 (6,700) | 40 | ◎ | >140 | 2.1 | × |
| C.E.3 | 666.85 (6,800) | 40 | ◎ | >140 | 3.0 | ◎ |
| Ex.3 | 735.50 (7,500) | 42 | ◎ | >140 | 1.5 | ◎ |
| C.E.4 | 764.92 (7,800) | 44 | ◎ | >140 | 0.6 | ◎ |
| Ex.4 | 608.01 (6,200) | 38 | ◎ | 110 | 4.5 | ◎ |
| Ex.5 | 980.67 (10,000) | 59 | ◎−○ | 120 | 2.0 | ◎ |
| C.E.5 | 1,176.80 (12,000) | 61 | △−× | 55 | 1.8 | ◎ |
| Ex.6 | 343.23 (3,500) | 33 | ◎ | >140 | 2.2 | ◎ |
| C.E.6 | 245.17 (2,500) | 31 | ◎ | >140 | 2.5 | ◎ |
| C.E.7 | 1,078.73 (11,000) | 61 | ○−△ | 90 | 0.6 | ◎ |

Note: Ex.: Example, C.E.: Comparative Example, MFR: Melt Flow Rate,
Comprehensive Evaluation: ◎: Very good, ○: Good, △:Slightly Poor,
× : Poor.

## Claims

1. A thermoplastic resin composition which comprises (I) 5 to 95 parts by weight of a thermoplastic resin and 95 to 5 parts by weight of a mixture of (II) a tri-block copolymer having a numerical average molecular weight of 100,000 or more and consisting of aromatic vinyl block-conjugated diene block-aromatic vinyl block, wherein the conjugated diene moiety is hydrogenated at a rate of 30% or more, and of (III) a block copolymer A or B shown in the following formula (1), characterized in that the block copolymer A or B has a numerical average molecular weight in the range of between 10,000 and 45,000 and consists of aromatic vinyl block and conjugated diene block, wherein the conjugated diene moiety is hydrogenated at a rate of 30% or more and the ratio by weight of aromatic vinyl block/conjugated diene block is in the range of 5/95 to 50/50, in which

$$A = (S - D)_n \text{ or } B = (D - S)_n - D \qquad (1)$$

wherein S: aromatic vinyl block,
D: conjugated diene block,
n: an integer of 1 to 5,

the ratio by weight of tri-block copolymer to block copolymer A or B being in the range of 95/5 to 20/80, with the proviso that the above-mentioned thermoplastic resin (I) is not a tackifier resin selected from natural and synthetic resins and is different from the tri-block copolymer (II) and block copolymer (III).

2. The thermoplastic resin composition according to claim 1, wherein the tri-block copolymer has a ratio by weight of aromatic vinyl moiety/conjugated diene moiety in the range of 5/95 to 80/20.

3. The thermoplastic resin composition according to claim 1 or 2, wherein the conjugated diene moiety of the tri-block copolymer is isoprene.

4. The thermoplastic resin composition according to any one of claims 1 to 3, wherein the conjugated diene moiety of the block copolymer A or B is isoprene.

5. The thermoplastic resin composition according to any one of claims 1 to 4, wherein the thermoplastic resin is a polyolefin type resin, a polystyrene type resin, a polyester type resin, a polyamide type resin, a polycarbonate resin, or a polyphenylene ether type resin.

## Patentansprüche

1. Thermoplastische Harzzusammensetzung, umfassend (I) 5 bis 95 Gewichtsteile eines thermoplastischen Harzes und 95 bis 5 Gewichtsteile eines Gemisches von (II) einem Tri-block Copolymer mit einem Zahlenmittel des Molekulargewichts von 100.000 oder mehr, welches aus einem aromatischen Vinylblock-konjugierten Dienblock-aromatischen Vinylblock besteht, wobei der konjugierte Dienteil zu 30% oder mehr hydriert ist, und von (III) einem in der folgenden Formel (1) gezeigten Blockcopolymer A oder B, dadurch gekennzeichnet, daß das Blockcopolymer A oder B ein Zahlenmittel des Molekulargewichts im Bereich zwischen 10.000 und 45.000 aufweist und aus aromatischem Vinylblock und konjugiertem Dienblock besteht, wobei der konjugierte Dienteil zu 30% oder mehr hydriert ist und das Gewichtsverhältnis von aromatischem Vinylblock/konjugiertem Dienblock im Bereich von 5/95 bis 50/50 ist, wobei

$$A = (S - D)_n \text{ oder } B = (D - S)_n - D \qquad (1)$$

worin S: aromatischer Vinylblock,
D: konjugierter Dienblock,
n: eine ganze Zahl von 1 bis 5 bedeuten,

wobei das Gewichtsverhältnis von Tri-block Copolymer zu Blockcopolymer A oder B im Bereich von 95/5 bis 20/80 ist, mit der Maßgabe, daß das vorgenannte thermoplastische Harz (I) kein klebrigmachendes Harz ist, das ausgewählt ist aus natürlichen und synthetischen Harzen und daß es unterschiedlich ist von dem Tri-block Copolymer (II) und dem Blockcopolymer (III).

2. Thermoplatische Harzzusammensetzung nach Anspruch 1, worin das Tri-block Coplymer ein Gewichtsverhältnis von aromatischem Vinylteil/konjugiertem Dienteil im Bereich von 5/95 bis 80/20 aufweist.

3. Thermoplastische Harzzusammensetzung nach Anspruch 1 oder 2, worin der konjugierte Dienteil des Tri-block Copolymers Isopren ist.

4. Thermoplastische Harzzusammensetzung nach einem der Ansprüche 1 bis 3, worin der konjugierte Dienteil des Blockcopolymers A oder B Isopren ist.

5. Thermoplastische Harzzusammensetzung nach einem der Ansprüche 1 bis 4, worin das thermoplastische Harz ein Harz vom Polyolefintyp, ein Harz vom Polystyroltyp, ein Harz vom Polyestertyp, ein Harz vom Polyamidtyp, ein Polycarbonatharz, oder ein Harz vom Polyphenylenethertyp ist.

**Revendications**

1. Composition de résine thermoplastique qui comprend (I) 5 à 95 parties en poids d'une résine thermoplastique et 95 à 5 parties en poids d'un mélange de (II) un copolymère tribloc ayant une masse moléculaire moyenne en nombre de 100 000 ou plus et consistant en vinyle bloc aromatique - diène bloc conjugué - vinyle bloc aromatique, dans laquelle la partie diène conjugué est hydrogénée dans un rapport de 30 % ou davantage, et de (III) un copolymère bloc A ou B montré dans la formule suivante (1), caractérisée en ce que le copolymère bloc A ou B possède une masse moléculaire moyenne en nombre dans la plage entre 10 000 et 45 000 et consiste en vinyle bloc aromatique et en diène bloc conjugué, dans laquelle la partie diène conjugué est hydrogénée dans des proportions de 30 % ou davantage et le rapport en poids de vinyle bloc aromatique/diène bloc conjugué se situe dans la plage de 5/95 à 50/50, dans laquelle

$$A = (S - D)_n \text{ ou } B = (D - S)_n - D \qquad (1)$$

dans laquelle S :        vinyle bloc aromatique,
D :        diène bloc conjugué,
n :        un nombre entier de 1 à 5,

le rapport en poids entre le copolymère tribloc et le copolymère bloc A ou B se situant dans la plage de 95/5 à 20/80, à condition que la résine thermoplastique (I) précitée ne soit pas une résine adhésive choisie parmi les résines naturelles et synthétiques et soit différente du copolymère tribloc (II) et du copolymère bloc (III).

2. Composition de résine thermoplastique selon la revendication 1, dans laquelle le copolymère tribloc a un rapport en poids entre la partie vinyle aromatique/partie diène conjugué dans la plage de 5/95 à 80/20.

3. Composition de résine thermoplastique selon la revendication 1 ou 2, dans laquelle la partie diène conjugué du copolymère tribloc est l'isoprène.

4. Composition de résine thermoplastique selon l'une quelconque des revendications 1 à 3, dans laquelle la partie diène conjugué du copolymère bloc A ou B est l'isoprène.

5. Composition de résine thermoplastique selon l'une quelconque des revendications 1 à 4, dans laquelle la résine thermoplastique est une résine de type polyoléfine, une résine de type polystyrène, une résine de type polyester, une résine de type polyamide, une résine de polycarbonate ou une résine de type polyphénylène éther.